(19) Europäisches Patentamt
European Patent Office
Office européen des brevets

(11) **EP 2 892 296 B1**

(12) # EUROPEAN PATENT SPECIFICATION

(45) Date of publication and mention
of the grant of the patent:
**26.07.2017 Bulletin 2017/30**

(51) Int Cl.:
**H04W 72/08** *(2009.01)* **H04W 84/04** *(2009.01)*

(21) Application number: **14150210.4**

(22) Date of filing: **06.01.2014**

(54) **RADIO RESOURCE ALLOCATION METHOD AND BASE STATION FOR USE IN CELLULAR WIRELESS COMMUNICATION SYSTEMS**

VERFAHREN ZUR FUNKBETRIEBSMITTELZUWEISUNG UND BASISSTATION FÜR ZELLULARE DRAHTLOSE KOMMUNIKATIONSSYSTEME

PROCÉDÉ D'ATTRIBUTION DE RESSOURCES RADIO ET STATION DE BASE POUR UNE UTILISATION DANS DES SYSTÈMES DE COMMUNICATION CELLULAIRE SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.07.2015 Bulletin 2015/28**

(60) Divisional application:
**17173425.4**

(73) Proprietor: **FUJITSU LIMITED**
**Kawasaki-shi,**
**Kanagawa 211-8588 (JP)**

(72) Inventors:
• **Hunukumbure, Rajaguru Mudiyanselage Mythri**
**Hillingdon, Greater London UB8 3WF (GB)**
• **Moulsley, Timothy**
**Caterham, Surrey CR3 5EE (GB)**

(74) Representative: **Fenlon, Christine Lesley et al**
**Haseltine Lake LLP**
**Lincoln House, 5th Floor**
**300 High Holborn**
**London WC1V 7JH (GB)**

(56) References cited:
**US-A1- 2010 099 431**

• ELSHERIF AHMED R ET AL: "Resource Allocation in Two-Tier Heterogeneous Networks through Enhanced Shadow Chasing", IEEE TRANSACTIONS ON WIRELESS COMMUNICATIONS, IEEE SERVICE CENTER, PISCATAWAY, NJ, US, vol. 12, no. 12, 1 December 2013 (2013-12-01), pages 6439-6453, XP011534613, ISSN: 1536-1276, DOI: 10.1109/TWC.2013.101813.130732 [retrieved on 2013-12-17]
• TOSHIHIKO NAKANO ET AL: "Downlink power allocation with CSI overhearing in an OFDMA macrocell/femtocell coexisting system", PERSONAL INDOOR AND MOBILE RADIO COMMUNICATIONS (PIMRC), 2012 IEEE 23RD INTERNATIONAL SYMPOSIUM ON, IEEE, 9 September 2012 (2012-09-09), pages 454-459, XP032273020, ISSN: 2166-9570, DOI: 10.1109/PIMRC.2012.6362828 ISBN: 978-1-4673-2566-0
• NAKANO TOSHIHIKO ET AL: "Interference Mitigation Based on Partial CSI Feedback and Overhearing in an OFDMA Heterogeneous System", 2013 IEEE 77TH VEHICULAR TECHNOLOGY CONFERENCE (VTC SPRING), IEEE, 2 June 2013 (2013-06-02), pages 1-5, XP032547932, ISSN: 1550-2252, DOI: 10.1109/VTCSPRING.2013.6692600 [retrieved on 2013-12-22]

**(Cont. next page)**

EP 2 892 296 B1

- JAMES C F LI ET AL: "Interference Mitigation and Spectrum Sharing for Heterogeneous Networks Based on CQI Feedbacks", VEHICULAR TECHNOLOGY CONFERENCE (VTC FALL), 2012 IEEE, IEEE, 3 September 2012 (2012-09-03), pages 1-5, XP032294484, DOI: 10.1109/VTCFALL.2012.6398909 ISBN: 978-1-4673-1880-8

- TALHA ZAHIR ET AL: "Interference Management in Femtocells", IEEE COMMUNICATIONS SURVEYS, IEEE, NEW YORK, NY, US, vol. 15, no. 1, 1 January 2013 (2013-01-01), pages 293-311, XP011493339, ISSN: 1553-877X, DOI: 10.1109/SURV.2012.020212.00101

**Description**

The present invention relates to a radio resource allocation method and Femto base station for use in LTE/LTE-A cellular wireless communication systems.

In a cellular deployment (particularly a non-planned one), cell edge interference can limit cell edge users' data rates and overall quality of service (QoS). Improving the performance of cell edge users is therefore a key target for all cellular networks. In a group of Femto cells this target can be even more significant, as the Femto cells are usually deployed by users without planning. This can result in a higher than acceptable level of interference for the cell edge user. As it is generally intended that Femto cells are inexpensive and ubiquitous, any solution to control interference should not significantly increase the product or the deployment costs of Femto cells.

For LTE and LTE-A systems, inter cell coordinated interference control (ICIC) and enhanced ICIC (eICIC) have been introduced as a means for neighbouring cells to dynamically exchange information about their resource allocations and attempt to avoid scheduling the same resources for the common cell edges. As the scheduling rate for LTE is 1 ms (the sub-frame duration), the information exchange rate needs to be faster than this, and for this LTE has specially designated X2 links. For non-planned, user-controlled small-cell deployments like Femto cells, the cost of having an X2 link can be very high and hence in practice the use of ICIC or eICIC is untenable for Femto cell deployments, where the product and deployment costs need to be kept low. In these situations, the default allocation is FFR (Fractional Frequency Reuse), where the cell edge bands are pre-defined for each Femto cell. However, this prevents a certain UE (user equipment) choosing the best band at a given location and time, and thus reduces multi-user diversity.

Accordingly it is desirable to provide an alternative method of avoiding interference at cell edges, especially for small-cell deployments like Femto cells in LTE/LTE-A and other systems, which partition time/frequency resource blocks amongst its users.

In cellular wireless communication systems a base station serving a first cell will "overhear" transmissions of user equipment which is located in a cell edge area of a second cell which neighbours the first cell. The present invention proposes to make use of such overheard transmissions.

WO2007107895A1 discloses a method for use in a peer to peer (P2P) network, in which a mobile station can overhear in a particular channel other mobile stations' feedback message(s) on testing signal results and decide whether or not to use that channel for P2P communication or not.

WO2012108605, WO2012074192 and WO2012108604 disclose a Relay Node (RN) within the coverage area of multiple base stations (BS) which overhears the uplink (UL) resource grants in the PDCCH channel for each BS to the user equipments (UEs). The RN can decode this information to determine if a conflict is occurring in the resource grants. If there is a conflict, the RN allocates its own resources to the UEs and obtains PUSCH data from the UEs on these allocated resources. The RN then listens to ACK/ NACK transmissions from BSs in response to data forwarded by the UEs on BS allocated resources. If there is a conflict, a NACK will be the likely result and in that case the RN can forward the data it collected from the UEs directly. Thus, this is in effect a proactive RN system to collect and pass uplink data from UE's to BS.

KR20100011018 proposes converting a point-to point cellular network to a point-to multipoint (PMP or a mesh) network. The UEs can overhear the messages passed from a BS to a particular UE and then, if the signal strength is higher than a threshold, the UE can repeat the message in a PMP mode.

In the papers of T. Nakano, M. Kaneko, et. al., "Downlink Power Allocation with CSI Overhearing in an OFDMA Macrocell/Femtocell Coexisting System" and "Interference Mitigation based on Partial CSI Feedback and Overhearing in an OFDMA Heterogeneous System", IEEE VTC 2013 (spring), Dresden, Germany, a Femtocell, placed within a larger Macro-cell, is assumed to have perfect overhearing capability. Within this assumption, the amount of interference that can be mitigated, and the resulting performance improvement, is calculated.

The paper of A. R. Elsherif et al., "Resource Allocation in Two-Tier Heterogeneous Networks through Enhanced Shadow Chasing", IEEE Transactions on Wireless Communications,, vol. 12, 1 December 2013, pp 6439-6453, XP011534613 relates to an enhanced shadow chasing method for Femto cell resource allocation to achieve interference mitigation in heterogeneous networks serving both Macro cell UEs and Home UEs. Downlink control information, together with over-heard Macro cell user ACK/NACK feedbacks and CQI reports, are used by a HeNB to assign its own downlink resources to mitigate downlink interference to MUEs.

US2010/0099431A1 discloses techniques for adapting to the presence of a jamming WAN AT by avoiding or selectively utilizing those bandwidth portions jammed by the WAN AT, in which a control message from the WAN AP to the WAN AT is intercepted and a spectrum resource that the WAN AT will use to communicate with the WAN AP is determined based at least in part on information such as Cell Radio Network Temporary Identifier.

According to a first aspect of the present invention there is provided a radio resource allocation method, for use in an LTE/LTE-A cellular wireless communication system configured to partition time/frequency resource blocks amongst a plurality of user equipments of the system and comprising a plurality of Femto base stations having a first Femto base station providing a first Femto cell and a second base station providing a second Femto cell, in which method the first Femto base station carries out the steps of: allocating orthogonal Zadoff-Chu codes for the transmittal of uplink control information by user equipments in each Femto cell such that only a subset of a set of possible orthogonal Zadoff-Chu codes is allocated to each Femto cell; determining values of one or more parameters, using data derived from the uplink control information on preferred sub-bands transmitted by a first user equipment, served by the second Femto cell, of the plurality of user equipments, which information is overheard and decoded by the first Femto base station; and, if there is conflict between preferred sub-band requests from the said first user equipment and a second user equipment, served by the first Femto cell, of the plurality of user equipments, allocating one or more resource blocks to the said second user equipment on the basis of the determined parameter value or values.

Thus, in an embodiment of the present invention uplink control signals "overheard" from another Femto eNB in a LTE or LTE-A system can be utilised to control the interference between user equipments. In particular, the overheard information can be used to generate parameter values on the basis of which resource blocks can be allocated. In this way a group of Femto base stations (eNBs) can coordinate their resource allocations, while allocating the best sub-bands suited to their user equipments, especially at the cell edge, so that the interference levels can be controlled. In LTE/LTE-A systems this can allow the achievement of near ICIC performance, but without the need for X2 links, thereby providing a solution which is cost effective, yet at the same time offers improved performance for cell edge users.

The overheard information may comprise CQI (channel quality indicators) and HARQ (Hybrid Automatic Repeat reQuest). Data from multiple neighbour cells may be considered in the method to generate a complete view of sub-band usage. Preferably a base station may take remedial action if a certain sub-band allocation increases the interference unexpectedly.

The parameter values may comprise values for the probability that resource blocks in the respective ones of the preferred sub-bands will be allocated by the second base station to the said first user equipment. In this case a resource block is allocated to the said second user equipment if, on the basis of the determined probability values, that resource block is less likely to be allocated by the second base station to the said first user equipment.

The first base station may determine the parameter value(s) using data derived from overheard and decoded uplink control information on preferred sub-bands transmitted by a group of first user equipments served by the second cell, and allocate one or more resource blocks to the said second user equipment on the basis of the determined parameter value(s) if there is conflict between preferred sub-band requests from the first user equipments and the said second user equipment. The parameter values may comprise values for the probability that resource blocks in the respective ones of the preferred sub-bands will be allocated by the second base station to the said first user equipments. In this case a resource block is allocated to the said second user equipment if, on the basis of the determined probability values, that resource block is less likely to be allocated by the second base station to any of the said first user equipments.

It is preferable that the second base station provides the first base station with information to enable the first base station to decode uplink control information transmitted by the said first user equipment(s), for example Cell Radio Network Temporary Identifier - C-RNTI - scrambling information for the said first user equipment(s).

If traffic load is spread unevenly between cells served by the plurality of base stations, then a cell with greater traffic load is preferably allocated a subset containing a greater number of Zadoff-Chu codes than a cell with a lesser traffic load.

In a method embodying the first aspect of the present invention the uplink control information may comprise CQI information which comprises preferred sub-band requests issued by the user equipments in the second cell. The uplink control information may further comprise HARQ messages which are used by the first base station to ascertain whether resource blocks have been allocated to the user equipments in the second cell. Preferably in this case the method further comprises, prior to determining parameter values, controlling user equipments in the cells such that each user equipment is not permitted to change a Zadoff-Chu code it is using for transmitting uplink control information throughout a single communication session with a base station.

It is desirable that, when allocating one or more resource blocks to the said second user equipment, a resource block in a sub-band requested by the said second user equipment is preferentially allocated to the said second user equipment.

The data used to determine the parameter values may further comprise at least one of: a scheduling mechanism used in allocating resource blocks to the user equipments served by the second cell; cell edge quality of service - QoS - guarantees for the user equipments served by the second cell; cell hierarchy in providing QoS; and cell hierarchy for resource block allocation.

If the determined parameter values indicate that it is highly likely that all resource blocks in all preferred sub-bands requested by the second user equipment served by the first cell have been allocated to user equipment(s) served by the second cell, the said second user equipment may be requested to provide alternative preferred sub-band requests.

A method embodying the present invention may further comprise reviewing the resource block allocation for the said second user equipment if performance in an allocated resource block decreases.

According to a second aspect of the present invention there is provided a Femto base station for use in an LTE/LTE-A cellular wireless communication system configured to partition time/frequency resource blocks amongst a plurality of user equipments of the system, which Femto base station is configured to provide a first cell and comprises: orthogonal Zadoff-Chu code allocation means for allocating orthogonal Zadoff-Chu codes for the transmittal of uplink control information by user equipments in each Femto cell such that only a subset of a set of possible orthogonal Zadoff-Chu codes is allocated to each Femto cell; parameter determining means configured to use data, derived from uplink control information on preferred sub-bands overheard and decoded from one or more first user equipment or equipments located in a second Femto cell provided by a second Femto base station of the system, to determine one or more parameter values; and radio resource allocation means configured to allocate resource blocks to second user equipment in the first Femto cell on the basis of the determined parameter value or values, if there is conflict between preferred sub-band requests from the first user equipment or equipments and the second user equipment.

According to a third aspect of the present invention there is provided an LTE/LTE-A cellular wireless communication system comprising a plurality of Femto base stations having a first Femto base station providing a first Femto cell and a second Femto base station providing a second Femto cell, wherein at least the first Femto base station is a Femto base station according to the second aspect of the present invention, the second Femto base station is configured to provide the first Femto base station with Cell Radio Network Temporary Identifier - C-RNTI - scrambling information for user equipment or equipments served by the second Femto base station, and the first Femto base station is configured to use the received C-RNTI scrambling information to decode the uplink control information overheard from user equipment or equipments located in second Femto cell.

According to a fourth aspect of the present invention there is provided a computer program which, when executed on a Femto base station in an LTE/LTE-A cellular wireless communication system, causes that base station to carry out a method in accordance with the first aspect of the present invention, or to become a base station in accordance with the second aspect of the present invention.

Reference will now be made, by way of example, to the accompanying drawings, in which:

Figure 1 illustrates a code set distribution amongst a group of Femto cells;
Figure 2 shows a Femto cell embodying the second aspect of the present invention; and
Figure 3 is a flowchart of an algorithm embodying the first aspect of the present invention.

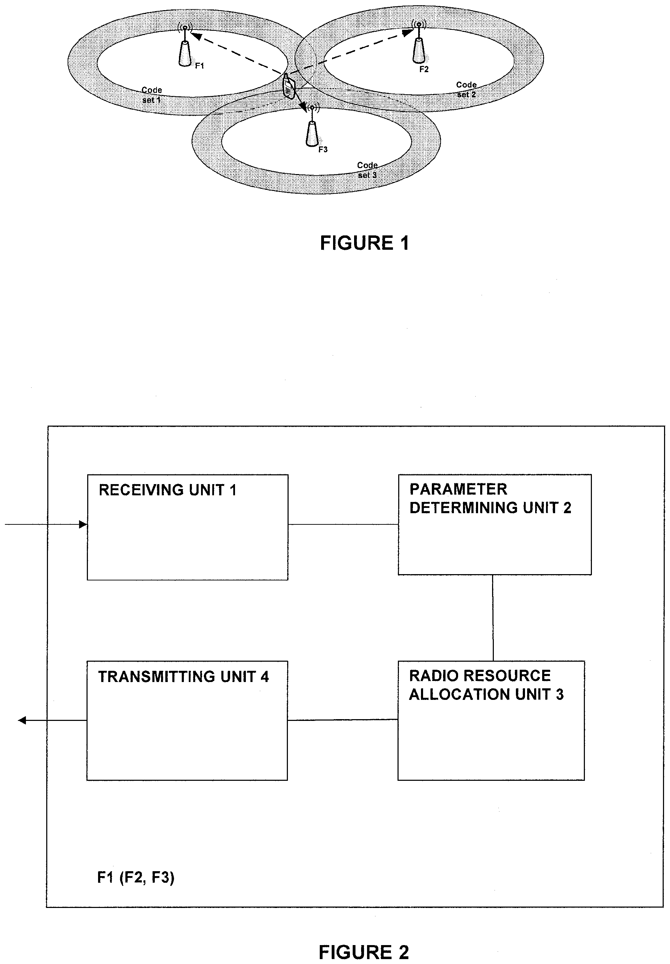

An embodiment of the present invention will now be described with reference to a deployment of three Femto cells (base stations or eNBs), F1, F2 and F3, in an LTE cellular wireless communication system, as shown in Figure 1.

As shown in Figure 2, each Femto cell F1, F2, F3 comprises a receiving unit 1 configured to receive radio transmissions including those from UEs served by the Femto cell itself and those overheard from UEs served by the other Femto cells. Femto cells F1, F2, F3 also comprise a parameter determining unit 2 configured to use data, derived from uplink control information on preferred sub-bands overheard and decoded from one or more UEs of the other cells, to determine one or more parameter values, such as the probability that resource blocks in respective ones of the preferred sub-bands will be allocated by the other cells to their UEs. Each Femto cell F1, F2, F3 further comprises a radio resource allocation unit 3 configured to allocate resource blocks to its UEs on the basis of the determined parameter value(s), if there is conflict between preferred sub-band requests from the UEs of the other cells and those of its own UEs. Information on resource block allocations is transmitted to the UEs served by the eNB F1 via a transmission unit 4.

With a view to controlling downlink interference, particularly to cell edge users, a base station embodying the present invention listens to (overhears) the uplink control information transmitted by users in other cells, determines the possibility a certain sub-band is used, and decides if, and if so how best, to re-use that sub-band in its own cell. In LTE, the uplink control information is carried on the PUCCH (Physical Uplink Control CHannel) and comprises CQI (Channel Quality Indicator), HARQ (Hybrid Automatic Repeat reQuest), and, for MIMO based transmissions, Rank Indicator (RI) and Precoding Matrix Indicator (PMI). This embodiment of the invention makes use of CQI and HARQ messages, especially the SNR values (or the coded differential SNR values) reported by the CQI and, after resource grant, the corresponding ACK/ NACK rates, to estimate a probability of sub-band allocation.

CQI messages are transmitted periodically over the PUCCH. The CQI transmission period can be set at selected values, between 2ms and 160ms. The period can be configurable, depending on the radio channel variability (or channel coherence time).

In LTE, the PUCCH messages bits are spread by orthogonal ZC (Zadoff-Chu) codes. For a single resource block (RB) there are 12 sub-carriers, hence LTE uses length 12 ZC codes to spread a single bit across this RB. With phase shifts, there can be 12 orthogonal ZC codes. LTE does not make a distinction on which codes can be used, and in a conventional LTE cell these 12 codes can be simultaneously used by 12 users to report back PUCCH in a single sub-frame. However, in this embodiment the number of codes that a single cell can use is restricted, so that, based on the Femto cell distribution, any one cell can work out when a certain code is used, whether it is from its own user or from a user connected to a neighbour cell. This restriction will not usually have any significant impact on user QoS, since in the environments in which Femto cell groups are used (such as in Enterprise, where a grid of Femto cells are used in a workspace, or in a group of flats) there are generally fewer active users. The PUCCH information is scrambled with cell ID, hence initially the Femto cells should communicate with each other (preferably over an S1 link) and share their cell ID based scrambling information. It is anticipated that, for a group of Femto cells from the same source, sharing this information would not be problematic.

Figure 1 depicts a group of three Femto cells amongst which the ZC code set (of 12 orthogonal ZC codes) has been divided into three subsets. The code set can be divided equally in uniform traffic load conditions or, if the traffic load is non-uniform, biased towards the cells with heavier traffic load. The code set is used by UEs across the cell area, but can be overheard by the neighbour cells if the UEs are in range, for example in the cell edge areas. The cell edge areas are those indicated by shading in Figure 1.

Under LTE standards each user (or UE) transmitted data is scrambled with a unique identifier called C-RNTI (Cell Radio Network Temporary Identifier), which is issued by the serving base station. It is desirable for this C-RNTI information to be shared by the neighbour cells over the S1 link, so the overheard information can be de-scrambled and understood by the neighbour cells. In other embodiments, the overheard information could be decoded in a different way.

A base station embodying the present invention is configured to determine values of one or more parameters, using data derived from uplink control information on preferred sub-bands overheard and decoded from user equipment(s) served by other cells. If there is conflict between preferred sub-band requests from the user equipment(s) served by the other cells and those of the base station's user equipment(s), the base station is operable to allocate one or more resource blocks to its user equipment(s) on the basis of the determined parameter value(s).

For example in one embodiment, which will be described in more detail below, the parameter values determined by a first base station are values for the probability that resource blocks in respective ones of the preferred sub-bands will be allocated by a second base station to one of its UEs, and the first base station is operable to allocate a resource block to one of its own UE's if, on the basis of the determined probability values, that resource block is less likely to be allocated by the second base station to its UEs. However, by way of example only and without limitation, alternative parameter values may be: past history (under repetitive conditions) of band allocations by the neighbour cells; expected transmitter and/or receiver power levels; spatial characteristics of transmitted signals, where these are relevant in determining whether a problematic collision would occur. The past history of band allocations, for example, could allow base stations to estimate the band allocations of neighbouring cells by overhearing the band requests and comparing any collisions that occurred with their own band allocations, and may be particularly relevant to indoor office environments, for example, where radio conditions are similar every day at a certain time of day.

Under LTE standards for periodic CQI reporting, a UE reports decodable MCS (Modulation and Coding Scheme) values for each of a number of preferred sub-bands selected from multiple sub-bands in the band. In a 10MHz LTE channel for example, the sub-bands consist of 6 Resource Blocks (RBs) and there will be 3 bandwidth parts, indicating 3 MCS value reports for 3 bands. This arrangement will be used as an example in the explanation below of an algorithm embodying the first aspect of the present invention.

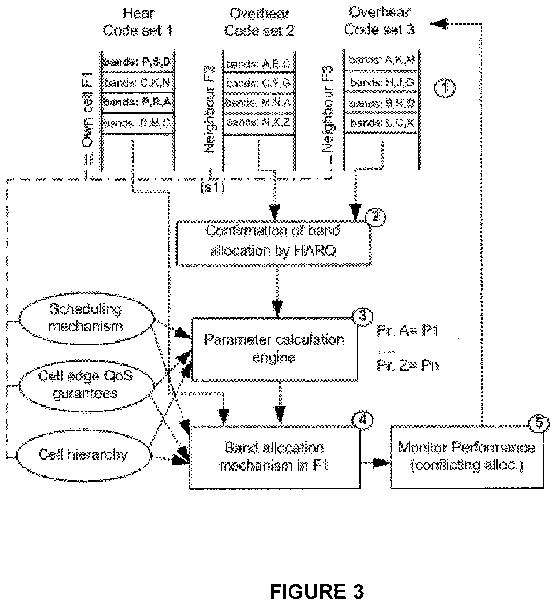

In an algorithm embodying the present invention, a probability value for the allocation (by the neighbour eNBs) of each CQI reported sub-band is computed by the eNB. The usage of these reported sub-bands in the cell edge of its own cell will depend on these probability values. An example of the algorithm as carried out by eNB F1 is depicted in the flow chart of Fig. 3.

In step 1, the eNB F1 records its own cell edge user sub-band requests as well as recording overheard information on neighbour cell edge UE sub-band requests. That is, eNB F1 takes note of the CQI information of its UEs (using its assigned ZC codes) via the PUCCH channel and overhears the CQI information from UEs in the neighbouring cells F2, F3. The decodable overheard information can all be regarded as being from cell edge users in the neighbouring cells. In its own cell, UEs reporting below a specified MCS threshold are regarded as cell edge users. In Fig. 3 sub-band requests with MCS (SINR) values above a specified threshold, indicating cell centre users, are marked in bold. Other MCS band requests are considered to be from cell edge users. The challenge for eNB F1 is to allocate the best possible sub-bands to its own cell edge users, while avoiding the use of sub-bands which have a high probability of allocation by the neighbour cells F2, F3.

In step 2, eNB F1 continues to listen for (overhear) any HARQ messages from the cell edge UEs of neighbouring cells. To improve the chance that this step will be successful a condition may be set that the UEs cannot change their ZC code throughout a single communication session with the eNB. A HARQ message from a UE can provide confirmation that 'a sub-band' (potentially one out of the 3 sub-bands reported by the UE) has been allocated to the UE. By enforcing an additional condition that the serving eNB should always try to allocate a cell edge user a resource block in one of the sub-bands reported (requested) by that UE, facilitates the determination of a probability value for allocation of each sub-band overheard by the eNB F1.

Step 3 of the algorithm comprises using a parameter calculation engine (parameter determining unit) to determine parameter values (in this case, allocation probability values) for each reported sub-band on the basis of all recorded (overheard) information about sub-band requests from UEs served by neighbouring eNBs. The parameter calculations desirably also take account of one or more pieces of other data, for example: the scheduling mechanisms of the neighbouring cells; any QoS guarantees for users at the cell edge of neighbouring cells; cell hierarchy in providing QoS; and any external inputs of relevance (one example of such an external input in an Enterprise Femto cell network would be whether the network administrator has configured an energy saving measure which limits the transmit powers and thus interference levels). For example, if the scheduling of neighbouring cells is biased towards Max C/I, sub-bands reported with higher MCS should be given more weight in the parameter calculations. Alternatively, if round-robin type scheduling is carried out, each of the 3 sub-bands reported by a single user can be given equal weight. In some cases, QoS guarantees cannot be met by allocation of certain MCS sub-bands and these sub-bands can be excluded from the calculations. These priorities (especially cell hierarchy) can change over time. For example in an office network, Femto cells covering work areas will have priority in working hours, while at lunch time the cells covering eating areas may have priority. The Femto eNBs F1, F2, F3 can negotiate these aspects over the S1 links and any changes in scheduling mechanism, QoS levels or cell hierarchy can be fed to the inputs of the probability calculation engine. These changes happen over a timescale of minutes or hours and the S1 link is more than capable (in terms of message delivery speed) of facilitating such updates.

If a certain sub-band is reported by multiple cell edge UEs, its allocation probability becomes high. However, within a single cell a sub-band can be allocated only once, so in subsequent reporting of a single sub-band the probability calculation should be done on the joint probability basis that the sub-band was not allocated in the first reporting. An example calculation for sub-band A, within the overheard code set 2 for cell F2 (in Fig. 3), is described below:

Assume use of a max C/I type scheduler and that sub-band A has reported higher MCS in the first user CQI report (the ordering sequence of the sub-bands refers to MCS reported). Denote the probability that sub-band A will be allocated to the first user as P(1 ,A).

Then the probability that sub-band A is not allocated to the first user is given by;

$$P'(1,A) = 1 - P(1,A)$$

Considering the third user, the probability that sub-band A is allocated (on the basis of MCS alone) to the third user is P(3a,A).

However, this allocation will happen only if sub-band A was not allocated to the first user. In this case the joint probability P(3,A) has to be considered as

$$P(3,A) = P'(1,A)*P(3a,A)$$

The overall probability P(A,F2) for allocation of sub-band A by neighbour cell F2 is given by the summation (union) of these probabilities, i.e.:

$$P(A,F2) = P(1,A) + P(3,A)$$

A similar allocation probability calculation can be carried out for sub-bands reported by neighbour cell F3 as well. On the basis that all the eNBs F1, F2, F3 overhear the reported sub-bands of cell edge users in neighbouring cells, F3 will overhear cell edge UE sub-band requests for F1 and F2 and would not allocate sub-band A to conflict with eNB F2. Having some form of cell hierarchy on allocation priority could simplify the probability calculation process.

In summary, in step 3 a probability of each reported sub-band being allocated by the neighbour eNBs F2, F3 is determined. These values are then used in deciding eNB F1's own cell edge sub-band allocations in step 4.

In step 4, the eNB F1 considers the CQI requests from its active users. Depending on the MCS values, eNB F1 can decide whether a user is in a cell edge area (lower MCS) or in an in-cell area (higher MCS). For cell edge UEs (marked in bold), if the sub-band requests are not in conflict with the overheard neighbour UE requests, the normal internal allocation process (based on the scheduling algorithm which is in effect) can be activated and suitable sub-bands allocated. However, if these requests are in conflict with neighbour UE requests, then the eNB F1 will consider the allocation probability values calculated in step 3 and decide on sub-band allocations for its cell edge UEs. If there is a hierarchy on eNBs, this can be used to help the decision on sub-band allocation. As the other cells will overhear this information and consider their own allocations, having a hierarchy (or preference) of eNBs will help to ease the decision process. If eNB F1 decides it is highly likely that all sub-bands reported have been used by the neighbour cells, it can request the UE to report CQI on other preferred sub-bands.

Step 5 involves monitoring performance after a certain sub-band allocation, especially in highly contested sub-bands. If the HARQ messages from a UE allocated a particular sub-band indicate a transition to a high error rate, and if the eNB (F1 in the example) is at a lower level of the eNB hierarchy, it can decide to change the allocation of sub-bands to its cell edge UEs or request new CQI reports from the UE affected. Alternatively, in some situations, eNB F1 can request a change of settings from the neighbour eNBs through the S1 link. The long term statistics of the process can also be shared with neighbour eNBs through the S1 link.

Steps 1 to 5 of the algorithm will be repeated iteratively as the eNBs operate continuously, serving their UEs. As the coherence times are higher for indoor environments and data intensive user sessions tend to last longer, the update rates on CQI and hence on this algorithm will be lower than for a typical Macro cell. Hence the calculation load imposed by this algorithm will be manageable to Femto cells and the benefits of cell edge performance improvement will outweigh the processing complexities.

Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality described above.

The invention may also be embodied as one or more device or apparatus programs (e.g. computer programs and computer program products) for carrying out part or all of the methods described herein. Such programs embodying the present invention may be stored on computer-readable media, or could, for example, be in the form of one or more signals. Such signals may be data signals downloadable from an Internet website, or provided on a carrier signal, or in any other form.

**Claims**

1. A radio resource allocation method, for use in an LTE/LTE-A cellular wireless communication system configured to partition time/frequency resource blocks amongst a plurality of user equipments of the system and comprising a plurality of Femto base stations (F1, F2, F3) having a first Femto base station (F1) providing a first Femto cell and a second base station (F2) providing a second Femto cell, in which method the first Femto base station (F1) carries out the steps of:

   allocating orthogonal Zadoff-Chu codes for the transmittal of uplink control information by user equipments in each Femto cell such that only a subset of a set of possible orthogonal Zadoff-Chu codes is allocated to each Femto cell; determining values of one or more parameters, using data derived from the uplink control information on preferred sub-bands transmitted by a first user equipment, served by the second Femto cell, of the plurality of user equipments, which information is overheard and decoded by the first Femto base station (F1); and, if there is conflict between preferred sub-band requests from the said first user equipment and a second user equipment, served by the first Femto cell, of the plurality of user equipments, allocating one or more resource blocks to the said second user equipment on the basis of the determined parameter value or values.

2. A method as claimed in claim 1, wherein the said one or more parameter values comprise values for the probability that resource blocks in the respective ones of the preferred sub-bands will be allocated by the second Femto base station to the said first user equipment, and a resource block is allocated to the said second user equipment if, on the basis of the determined probability values, that resource block is less likely to be allocated by the second Femto base station to the said first user equipment.

3. A method as claimed in claim 1, wherein the first Femto base station determines the parameter value or values using data derived from overheard and decoded uplink control information on preferred sub-bands transmitted by a group of first user equipments served by the second Femto cell, and allocates one or more resource blocks to the said second user equipment on the basis of the determined parameter value or values if there is conflict between preferred sub-band requests from the first user equipments and the said second user equipment.

4. A method as claimed in claim 3, wherein the said one or more parameter values comprise values for the probability that resource blocks in the respective ones of the preferred sub-bands will be allocated by the second Femto base station to the said first user equipments, and a resource block is allocated to the said second user equipment if, on the basis of the determined probability values, that resource block is less likely to be allocated by the second Femto base station to any of the said first user equipments.

5. A method as claimed in any preceding claim, wherein the second Femto base station provides the first Femto base station with information to enable the first Femto base station to decode uplink control information transmitted by the said first user equipment or equipments .

6. A method as claimed in claim 5, wherein the information provided by the second Femto base station is Cell Radio Network Temporary Identifier - C-RNTI - scrambling information for the said first user equipment or equipments.

7. A method as claimed in any preceding claim, wherein, if traffic load is spread unevenly between Femto cells served by the plurality of Femto base stations, then a Femto cell with greater traffic load is allocated a subset containing a greater number of Zadoff-Chu codes than a Femto cell with a lesser traffic load.

8. A method as claimed in any preceding claim, wherein the uplink control information comprises CQI information which comprises preferred sub-band requests issued by the user equipments in the second Femto cell.

9. A method as claimed in claim 8, wherein the uplink control information further comprises HARQ messages which are used by the first Femto base station to ascertain whether resource blocks have been allocated to the user equipments in the second Femto cell.

10. A method as claimed in claim 9, comprising, prior to determining parameter values, controlling user equipments in the Femto cells such that each user equipment is not permitted to change a Zadoff-Chu code it is using for transmitting uplink control information throughout a single communication session with a Femto base station.

11. A method as claimed in any preceding claim, wherein, when allocating one or more resource blocks to the said second user equipment, a resource block in a sub-band requested by the said second user equipment is preferentially allocated to the said second user equipment.

12. A method as claimed in any preceding claim, wherein the data used to determine the parameter values further comprises at least one of: a scheduling mechanism used in allocating resource blocks to the user equipments served by the second Femto cell; cell edge quality of service - QoS - guarantees for the user equipments served by the second Femto cell; cell hierarchy in providing QoS; and cell hierarchy for resource block allocation.

13. A method as claimed in any preceding claim, wherein, if the determined parameter values indicate that it is highly likely that all resource blocks in all preferred sub-bands requested by the second user equipment served by the first Femto cell have been allocated to user equipment or equipments served by the second Femto cell, the said second user equipment is requested to provide alternative preferred sub-band requests.

14. A method as claimed in any preceding claim, further comprising reviewing the resource block allocation for the said second user equipment if performance in an allocated resource block decreases.

15. A Femto base station (F1; F2; F3) for use in an LTE/LTE-A cellular wireless communication system configured to partition time/frequency resource blocks amongst a plurality of user equipments of the system, which Femto base station is configured to provide a first cell and comprises:

orthogonal Zadoff-Chu code allocation means for allocating orthogonal Zadoff-Chu codes for the transmittal of uplink control information by user equipments in each Femto cell such that only a subset of a set of possible orthogonal Zadoff-Chu codes is allocated to each Femto cell; parameter determining means (2) configured to use data, derived from uplink control information on preferred sub-bands overheard and decoded from one or more first user equipment or equipments located in a second Femto cell provided by a second Femto base station of the system, to determine one or more parameter values; and radio resource allocation means (3) configured to allocate resource blocks to second user equipment in the first Femto cell on the basis of the determined parameter value or values, if there is conflict between preferred sub-band requests from the first user equipment or equipments and the second user equipment.

16. An LTE/LTE-A cellular wireless communication system comprising a plurality of Femto base stations (F1, F2, F3) having a first Femto base station (F1) providing a first Femto cell and a second Femto base station (F2) providing a second Femto cell, wherein at least the first Femto base station (F1) is a Femto base station as claimed in claim 15, the second Femto base station (F2) is configured to provide the first Femto base station (F1) with Cell Radio Network Temporary Identifier - C-RNTI - scrambling information for user equipment or equipments served by the second Femto base station (F2), and the first Femto base station (F1) is configured to use the received C-RNTI scrambling information to decode the uplink control information overheard from user equipment or equipments located in second Femto cell.

17. A computer program product which, when executed on a Femto base station in a LTE/LTE-A cellular wireless communication system, causes that Femto base station to carry out a method as claimed in any one of claims 1 to 14.

**Patentansprüche**

1. Funkressourcenzuweisungsverfahren zur Verwendung in einem zellularen drahtlosen LTE/LTE-A-Kommunikationssystem, das dazu ausgelegt ist, Zeit-/Frequenzressourcenblöcke unter einer Vielzahl von Teilnehmereinrichtungen des Systems aufzuteilen, und das eine Vielzahl von Femtobasisstationen (F1, F2, F3) umfasst, wobei eine erste Femtobasisstation (F1) eine erste Femtozelle und eine zweite Basisstation (F2) eine zweite Femtozelle bereitstellt, wobei bei dem Verfahren die erste Femtobasisstation (F1) folgende Schritte durchführt:

Zuweisen von orthogonalen Zadoff-Chu-Codes für die Übertragung von Aufwärtssteuerinformationen durch Teilnehmereinrichtungen in jeder Femtozelle, sodass jeder Femtozelle nur ein Untersatz des Satzes möglicher orthogonaler Zadoff-Chu-Codes zugewiesen wird;
Bestimmen von Werten eines oder mehrerer Parameter unter Verwendung von Daten, die aus den Aufwärtssteuerinformationen in bevorzugten Unterbändern abgeleitet werden, die von einer ersten Teilnehmereinrichtung, die von der zweiten Femtozelle bedient wird, der Vielzahl von Teilnehmereinrichtungen übertragen werden, wobei die Informationen von der ersten Femtobasisstation (F1) mitgehört und decodiert werden; und
wenn zwischen Anforderungen bevorzugter Unterbänder von der ersten Teilnehmereinrichtung und einer zweiten Teilnehmereinrichtung, die von der ersten Femtozelle bedient wird, der Vielzahl von Teilnehmereinrichtungen ein Konflikt besteht, Zuweisen auf Basis des bestimmten Parameterwertes bzw. der bestimmten Parameterwerte eines oder mehrerer Ressourcenblöcke zur zweiten Teilnehmereinrichtung.

2.  Verfahren nach Anspruch 1, wobei der eine oder die mehreren Parameterwerte Werte für die Wahrscheinlichkeit umfassen, dass Ressourcenblöcke in den jeweiligen der bevorzugten Unterbänder von der zweiten Femtobasisstation der ersten Teilnehmereinrichtung zugewiesen werden und ein Ressourcenblock der zweiten Teilnehmereinrichtung zugewiesen wird, wenn auf Basis der bestimmten Wahrscheinlichkeitswerte es weniger wahrscheinlich ist, dass dieser Ressourcenblock von der zweiten Femtobasisstation der ersten Teilnehmereinrichtung zugewiesen wird.

3.  Verfahren nach Anspruch 1, wobei die erste Femtobasisstation den Parameterwert oder die Parameterwerte unter Verwendung von Daten bestimmt, die aus mitgehörten und decodierten Aufwärtssteuerinformationen in bevorzugten Unterbändern abgeleitet werden, die von einer Gruppe erster Teilnehmereinrichtungen übertragen werden, die von der zweiten Femtozelle bedient werden, und der zweiten Teilnehmereinrichtung auf Basis des bestimmten Parameterwerts bzw. der bestimmten Parameterwerte einen oder mehrere Ressourcenblöcke zuweist, wenn zwischen Anforderungen bevorzugter Unterbänder von den ersten Teilnehmereinrichtungen und der zweiten Teilnehmereinrichtung ein Konflikt besteht.

4.  Verfahren nach Anspruch 3, wobei der eine oder die mehreren Parameterwerte Werte für die Wahrscheinlichkeit umfassen, dass Ressourcenblöcke in den jeweiligen der bevorzugten Unterbänder von der zweiten Femtobasisstation den ersten Teilnehmereinrichtungen zugewiesen werden und ein Ressourcenblock der zweiten Teilnehmereinrichtung zugewiesen wird, wenn auf Basis der bestimmten Wahrscheinlichkeitswerte es weniger wahrscheinlich ist, dass dieser Ressourcenblock von der zweiten Femtobasisstation einer der ersten Teilnehmereinrichtungen zugewiesen wird.

5.  Verfahren nach einem der vorhergehenden Ansprüche, wobei die zweite Femtobasisstation der ersten Femtobasisstation Informationen bereitstellt, um es der ersten Femtobasisstation zu ermöglichen, Aufwärtssteuerinformationen zu decodieren, die von der ersten Teilnehmereinrichtung oder den ersten Teilnehmereinrichtungen übertragen werden.

6.  Verfahren nach Anspruch 5, wobei es sich bei den von der zweiten Femtobasisstation bereitgestellten Informationen um C-RNTI-Scramblinginformationen (Cell Radio Network Temporary Identifier) für die erste Teilnehmereinrichtung bzw. die ersten Teilnehmereinrichtungen handelt.

7.  Verfahren nach einem der vorhergehenden Ansprüche, wobei, wenn die Verkehrslast zwischen Femtozellen, die von der Vielzahl von Femtobasisstationen bedient werden, ungleichmäßig verteilt ist, einer Femtozelle mit größerer Verkehrslast ein Untersatz zugewiesen wird, der eine größere Anzahl Zadoff-Chu-Codes enthält als eine Femtozelle mit geringerer Verkehrslast.

8.  Verfahren nach einem der vorhergehenden Ansprüche, wobei die Aufwärtssteuerinformationen CQI-Informationen umfassen, die Anforderungen bevorzugter Unterbänder umfassen, die von den Teilnehmereinrichtungen in der zweiten Femtozelle ausgegeben werden.

9.  Verfahren nach Anspruch 8, wobei die Aufwärtssteuerinformationen ferner HARQ-Nachrichten umfassen, die von der ersten Femtobasisstation verwendet werden, um zu prüfen, ob den Teilnehmereinrichtungen in der zweiten Femtozelle Ressourcenblöcke zugewiesen wurden.

10. Verfahren nach Anspruch 9, das vor dem Bestimmen von Parameterwerten das Steuern von Teilnehmereinrichtungen in den Femtozellen derart umfasst, dass es jeder Teilnehmereinrichtung nicht gestattet ist, während einer einzelnen Kommunikationssitzung mit einer Femtobasisstation einen Zadoff-Chu-Code zu ändern, den sie zum Übertragen von Aufwärtssteuerinformationen verwendet.

11. Verfahren nach einem der vorhergehenden Ansprüche, wobei, wenn ein oder mehrere Ressourcenblöcke der zweiten Teilnehmereinrichtung zugewiesen werden, ein Ressourcenblock in einem Unterband, das von der zweiten Teilnehmereinrichtung angefordert wurde, vorzugsweise der zweiten Teilnehmereinrichtung zugewiesen wird.

12. Verfahren nach einem der vorhergehenden Ansprüche, wobei die Daten, die verwendet werden, um die Parameterwerte zu bestimmen, ferner mindestens eines der Folgenden umfassen: einen Planungsmechanismus, der bei der Zuweisung von Ressourcenblöcken zu Teilnehmereinrichtungen verwendet werden, die von der zweiten Femtozelle bedient werden; Zellenranddienstgütegarantien (Quality of Service - QoS) für die Teilnehmereinrichtungen, die von der zweiten Femtozelle bedient werden; Zellenhierarchie bei der Bereitstellung von QoS und Zellenhierarchie für die Ressourcenblockzuweisung.

13. Verfahren nach einem der vorhergehenden Ansprüche, wobei, wenn die bestimmten Parameterwerte anzeigen, dass es sehr wahrscheinlich ist, dass alle Ressourcenblöcke in allen bevorzugten Unterbändern, die von der zweiten Teilnehmereinrichtung angefordert wurden, die von der ersten Femtozelle bedient wird, einer oder mehreren Teilnehmereinrichtungen zugewiesen wurden, die von der zweiten Femtozelle bedient werden, die zweite Teilnehmereinrichtung aufgefordert wird, alternative Anforderungen bevorzugter Unterbänder bereitzustellen.

14. Verfahren nach einem der vorhergehenden Ansprüche, das ferner das Überprüfen der Ressourcenblockzuweisung für die zweite Teilnehmereinrichtung umfasst, wenn sich die Leistung in einem zugewiesenen Ressourcenblock verringert.

15. Femtobasisstation (F1; F2; F3) zur Verwendung in einem zellularen drahtlosen LTE/LTE-A-Kommunikationssystem, das dazu ausgelegt ist, Zeit-/Frequenzressourcenblöcke unter einer Vielzahl von Teilnehmereinrichtungen des Systems aufzuteilen, wobei die Femtobasisstation dazu ausgelegt ist, eine erste Zelle bereitzustellen, und Folgendes umfasst:

orthogonale Zadoff-Chu-Codezuweisungsmittel zum Zuweisen von orthogonalen Zadoff-Chu-Codes für die Übertragung von Aufwärtssteuerinformationen durch Teilnehmereinrichtungen in jeder Femtozelle, sodass jeder Femtozelle nur ein Untersatz eines Satzes möglicher orthogonaler Zadoff-Chu-Codes zugewiesen wird;

Parameterbestimmungsmittel (2), die dazu ausgelegt sind, Daten zu verwenden, die aus Aufwärtssteuerinformationen in bevorzugten Unterbändern abgeleitet werden, die von einer oder mehreren ersten Teilnehmereinrichtung oder Teilnehmereinrichtungen mitgehört und decodiert werden, die sich in einer zweiten Femtozelle befinden, die von einer zweiten Femtobasisstation des Systems bereitgestellt ist, um einen oder mehrere Parameterwerte zu bestimmen; und

Funkressourcenzuweisungsmittel (3), die dazu ausgelegt sind, auf Basis des bestimmten Parameterwerts bzw. der bestimmten Parameterwerte der zweiten Teilnehmereinrichtung in der ersten Femtozelle Ressourcenblöcke zuzuweisen, wenn zwischen Anforderungen bevorzugter Unterbänder von der ersten Teilnehmereinrichtung bzw. den ersten Teilnehmereinrichtungen und der zweiten Teilnehmereinrichtung ein Konflikt besteht.

16. Zellulares drahtloses LTE/LTE-A-Kommunikationssystem, das eine Vielzahl von Femtobasisstationen (F1, F2, F3) umfasst, wobei eine erste Femtobasisstation (F1) eine erste Femtozelle und eine zweite Femtobasisstation (F2) eine zweite Femtozelle bereitstellt, wobei mindestens die erste Femtobasisstation (F1) eine Femtobasisstation nach Anspruch 15 ist, die zweite Femtobasisstation (F2) dazu ausgelegt ist, der ersten Femtobasisstation (F1) C-RNTI-Scramblinginformationen (Cell Radio Network Temporary Identifier) für eine oder mehrere Teilnehmereinrichtungen bereitzustellen, die von der zweiten Femtobasisstation (F2) bedient werden, und die erste Femtobasisstation (F1) dazu ausgelegt ist, die empfangenen C-RNTI-Scramblinginformationen zu verwenden, um die Aufwärtssteuerinformationen zu decodieren, die von der Teilnehmereinrichtung bzw. den Teilnehmereinrichtungen, die sich in der zweiten Femtozelle befinden, mitgehört werden.

17. Computerprogrammprodukt, das, wenn es auf einer Femtobasisstation in einem zellularen drahtlosen LTE/LTE-A-Kommunikationssystem ausgeführt wird, bewirkt, dass die Femtobasisstation ein Verfahren nach einem der Ansprüche 1 bis 14 durchführt.

**Revendications**

1. Procédé d'allocation de ressources radio, pour une utilisation dans un système de communication cellulaire sans fil LTE/LTE-A configuré pour diviser des blocs de ressource en temps/fréquence parmi une pluralité d'équipements utilisateurs du système et comprenant une pluralité de stations de base Femto (F1, F2, F3) ayant une première station de base Femto (F1) fournissant une première cellule Femto et une seconde station de base (F2) fournissant un seconde cellule Femto, procédé dans lequel la première station de base Femto (F1) exécute les étapes consistant à :

allouer des codes orthogonaux Zadoff-Chu pour la transmission d'informations de commande de liaison montante par des équipements utilisateurs dans chaque cellule Femto de sorte que seul un sous-ensemble d'un ensemble de codes orthogonaux Zadoff-Chu possibles est alloué à chaque cellule Femto ;

déterminer des valeurs d'un ou plusieurs paramètres, en utilisant des données dérivées des informations de commande de liaison montante sur des sous-bandes préférées transmises par un premier équipement utilisateur desservi par la seconde cellule Femto, parmi la pluralité d'équipements utilisateurs, lesquelles informations sont entendues et décodées par la première station de base Femto (F1) ; et,

en cas de conflit entre des demandes de sous-bandes préférées provenant dudit premier équipement utilisateur et d'un second équipement utilisateur, desservis par la première cellule Femto, parmi la pluralité d'équipements utilisateurs, l'allocation d'un ou plusieurs blocs de ressource audit second équipement utilisateur sur la base de la valeur ou des valeurs de paramètre déterminées.

**2.** Procédé selon la revendication 1, dans lequel ladite une ou plusieurs valeurs de paramètre comprennent des valeurs de la probabilité que des blocs de ressource dans les sous-bandes respectives des sous-bandes préférées seront alloués par la seconde station de base Femto audit premier équipement utilisateur, et un bloc de ressource est alloué audit second équipement utilisateur si, sur la base des valeurs de probabilité déterminées, ce bloc de ressource est moins susceptible d'être alloué par la seconde station de base Femto audit premier équipement utilisateur.

**3.** Procédé selon la revendication 1, dans lequel la première station de base Femto détermine la valeur ou les valeurs de paramètre en utilisant des données dérivées d'informations de commande de liaison montante entendues et décodées sur des sous-bandes préférées transmises par un groupe de premiers équipements utilisateurs desservis par la seconde cellule Femto, et alloue un ou plusieurs blocs de ressource audit second équipement utilisateur sur la base de la valeur ou des valeurs de paramètre déterminées en cas de conflit entre des demandes de sous-bandes préférées provenant des premiers équipements utilisateurs et dudit second équipement utilisateur.

**4.** Procédé selon la revendication 3, dans lequel ladite une ou plusieurs valeurs de paramètres comprennent des valeurs de la probabilité que des blocs de ressource dans les sous-bandes respectives des sous-bandes préférées seront alloués par la seconde station de base Femto auxdits premiers équipements utilisateurs, et un bloc de ressource est alloué audit second équipement utilisateur si, sur la base des valeurs de probabilité déterminées, ce bloc de ressource est moins susceptible d'être alloué par la seconde station de base Femto à l'un quelconque desdits premiers équipements utilisateurs.

**5.** Procédé selon l'une quelconque des revendications précédentes, dans lequel la seconde station de base Femto fournit à la première station de base Femto des informations pour permettre à la première station de base Femto de décoder des informations de commande de liaison montante transmises par ledit ou lesdits premiers équipements utilisateurs.

**6.** Procédé selon la revendication 5, dans lequel les informations fournies par la seconde station de base Femto sont des informations de brouillage Identifiant Temporaire de Réseau Radio Cellulaire - C-RNTI - pour ledit ou lesdits premiers équipements utilisateurs.

**7.** Procédé selon l'une quelconque des revendications précédentes, dans lequel, si la charge de trafic est répartie de manière inégale entre les cellules Femto desservies par la pluralité de stations de base Femto, alors une cellule Femto ayant une plus grande charge de trafic est allouée à un sous-ensemble contenant un nombre plus grand de codes Zadoff-Chu qu'une cellule Femto ayant une charge de trafic moins grande.

**8.** Procédé selon l'une quelconque des revendications précédentes, dans lequel les informations de commande de liaison montante comprennent des informations CQI qui comprennent des demandes de sous-bandes préférées émises par les équipements utilisateurs dans la seconde cellule Femto.

**9.** Procédé selon la revendication 8, dans lequel les informations de commande de liaison montante comprennent en outre des messages HARQ qui sont utilisés par la première station de base Femto pour vérifier si des blocs de ressource ont été alloués aux équipements utilisateurs dans la seconde cellule Femto.

**10.** Procédé selon la revendication 9, comprenant, avant la détermination de valeurs de paramètre, la commande des équipements utilisateurs dans les cellules Femto de telle sorte que chaque équipement utilisateur n'est pas autorisé à changer un code Zadoff-Chu qu'il utilise pour transmettre des informations de commande de liaison montante tout au long d'une session de communication unique avec une station de base Femto.

**11.** Procédé selon l'une quelconque des revendications précédentes, dans lequel, lors de l'allocation d'un ou plusieurs blocs de ressource audit second équipement utilisateur, un bloc de ressource dans une sous-bande demandée par ledit second équipement utilisateur est de préférence alloué audit second équipement utilisateur.

**12.** Procédé selon l'une quelconque des revendications précédentes, dans lequel les données utilisées pour déterminer les valeurs de paramètre comprennent en outre au moins l'un parmi : un mécanisme de programmation utilisé dans l'allocation de blocs de ressource aux équipements utilisateurs desservis par la seconde cellule Femto ; des garanties de qualité de service - QoS - de limite de cellules pour les équipements utilisateurs desservis par la seconde cellule Femto ; une hiérarchie de cellules pour fournir la qualité de service ; et une hiérarchie de cellules pour l'allocation de blocs de ressource.

**13.** Procédé selon l'une quelconque des revendications précédentes, dans lequel, si les valeurs de paramètre déterminées indiquent qu'il est très probable que tous les blocs de ressource dans toutes les sous-bandes préférées demandées par le second équipement utilisateur desservi par la première cellule Femto aient été alloués à l'équipement ou les équipements utilisateurs desservis par la seconde cellule Femto, on demande au second équipement utilisateur de fournir des demandes de sous-bandes préférées en variante.

**14.** Procédé selon l'une quelconque des revendications précédentes, comprenant en outre l'examen de l'allocation de blocs de ressource pour ledit second équipement utilisateur si la performance dans un bloc de ressource alloué diminue.

**15.** Station de base Femto (F1 ; F2 ; F3) destinée à être utilisée dans un système de communication cellulaire sans fil LTE/LTE-A configuré pour diviser des blocs de ressource en temps/fréquence parmi une pluralité d'équipements utilisateurs du système, laquelle station de base Femto est configurée pour fournir une première cellule et comprend :

des moyens d'allocation de codes orthogonaux Zadoff-Chu pour allouer des codes orthogonaux Zadoff-Chu pour la transmission d'informations de commande de liaison montante par des équipements utilisateurs dans chaque cellule Femto de sorte que seul un sous-ensemble d'un ensemble de codes orthogonaux Zadoff-Chu possibles est alloué à chaque cellule Femto ; des moyens de détermination de paramètres (2) configurés pour utiliser des données, dérivées des informations de commande de liaison montante sur des sous-bandes préférées entendues et décodées depuis un ou plusieurs premiers équipements utilisateurs situés dans une seconde cellule Femto fournie par une seconde station de base Femto, pour déterminer une ou plusieurs valeurs de paramètre ; et des moyens d'allocation de ressources radio (3) configurés pour allouer des blocs de ressource à un second équipement utilisateur dans la première cellule Femto sur la base de la valeur ou des valeurs de paramètre déterminées, en cas de conflit entre des demandes de sous-bandes préférées provenant du premier ou des premiers équipements utilisateurs et du second équipement utilisateur.

**16.** Système de communication sans fil cellulaire LTE/LTE-A comprenant une pluralité de stations de base Femto (F1, F2, F3) ayant une première station de base Femto (F1) fournissant une première cellule Femto et une seconde station de base (F2) fournissant un seconde cellule Femto, dans lequel au moins la première station de base Femto (F1) est une station de base Femto selon la revendication 15, la seconde station de base Femto (F2) est configurée pour fournir à la première station de base Femto (F1) des informations de brouillage Identifiant Temporaire de Réseau Radio Cellulaire - C-RNTI - pour un équipement ou des équipements utilisateurs desservis par la seconde station de base Femto (F2), et la première station de base Femto (F1) est configurée pour utiliser les informations de brouillage C-RNTI reçues afin de décoder les informations de commande de liaison montante entendues par un équipement ou des équipements utilisateurs situés dans la seconde cellule Femto.

**17.** Produit de programme informatique qui, lorsqu'il est exécuté sur une station de base Femto dans un système de communication sans fil cellulaire LTE/LTE-A, amène cette station de base Femto à effectuer un procédé selon l'une quelconque des revendications 1 à 14.

**FIGURE 1**

RECEIVING UNIT 1

PARAMETER
DETERMINING UNIT 2

TRANSMITTING UNIT 4

RADIO RESOURCE
ALLOCATION UNIT 3

F1 (F2, F3)

**FIGURE 2**

**FIGURE 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007107895 A1
- WO 2012108605 A
- WO 2012074192 A
- WO 2012108604 A
- KR 20100011018
- US 20100099431 A1

**Non-patent literature cited in the description**

- Downlink Power Allocation with CSI Overhearing in an OFDMA Macrocell/Femtocell Coexisting System. **T. NAKANO ; M. KANEKO.** Interference Mitigation based on Partial CSI Feedback and Overhearing in an OFDMA Heterogeneous System. IEEE VTC 2013
- **A. R. ELSHERIF et al.** Resource Allocation in Two-Tier Heterogeneous Networks through Enhanced Shadow Chasing. *IEEE Transactions on Wireless Communications,* 01 December 2013, vol. 12, 6439-6453